# FASCICULE DE BREVET EUROPEEN

(11) **EP 2 208 910 B1**
(45) Date de publication et mention de la délivrance du brevet: **20.03.2013**
(21) Numéro de dépôt: 09178771.3
(22) Date de dépôt: 10.12.2009
(51) Int. Cl.: F16F 1/38, B60K 5/12, H02K 5/24

(54) **Ensemble comportant un moteur et des tubes associés à un châssis**
Anordnung mit einem Motor und Rohre eines Fahrgestells
Assembly comprising an engine and a chassis associated with tubes

(30) Priorité: 14.01.2009 FR 0950173
(43) Date de publication de la demande: 21.07.2010
(73) Titulaire: Peugeot Citroën Automobiles SA, 78140 Vélizy-Villacoublay (FR)
(72) Inventeur: Lanotte, Stéphane, 94100, SAINT MAUR DES FOSSES (FR); Dusi, Jacques, 77220, GRETZ ARMAINVILLIERS (FR)
(74) Mandataire: Ménès, Catherine

(56) Documents cités:
- US-A- 2 239 319
- US-B1- 6 513 801

## Description

L'invention concerne un ensemble comportant un moteur et des tubes associés à un châssis tel que décrit par le document US-A-2 239 319.

Il existe des châssis de véhicule équipés de tubes de fixation d'un moteur électrique. Ces tubes sont fixés sans aucun degré de liberté et de façon non démontable sur le châssis. Ce moteur électrique est apte à entraîner en rotation les roues motrices du véhicule. Typiquement, ces tubes sont situés à l'arrière du châssis et sous la partie formant le coffre du véhicule. L'espacement et la position de ces tubes de fixation par rapport au châssis sont déterminés pour garantir un bon équilibrage du moteur électrique. Un bon équilibrage du moteur se traduit par une diminution des vibrations transmises par le moteur au châssis du véhicule. Généralement, il n'est donc pas possible de modifier l'espacement ou la position de ces tubes de fixation.

Classiquement, le moteur électrique est fixé sur ces tubes par l'intermédiaire de bielles de fixation. Une bielle de fixation s'étend longitudinalement entre une extrémité proximale fixée au châssis et une extrémité distale directement fixée sur le moteur. Ces bielles doivent être disposées par rapport au moteur de façon à amortir au mieux les vibrations qu'il génère lors de son fonctionnement. Pour cela, la position des bielles est déterminée en fonction de la position de l'axe de roulis du moteur. L'axe de roulis du moteur correspond à l'axe du moteur autour duquel il a tendance à tourner sur lui-même lors de son fonctionnement. L'axe de roulis passe sensiblement par le centre de gravité du moteur.

Il est connu de raccorder mécaniquement l'extrémité proximale de la bielle au tube par l'intermédiaire d'équerres. Ces équerres sont soudées d'un côté sur le tube et de l'autre côte porte une barre horizontale. L'extrémité proximale de la bielle est fixée sur cette barre horizontale. Pour cela, la barre horizontale est introduite dans un alésage réalisé dans l'extrémité proximale de la bielle. Lors de l'assemblage de la bielle sur la barre, la barre est introduite dans l'alésage en la déplaçant le long d'un axe de révolution de cet alésage. Cette barre doit donc nécessairement être démontable.

L'utilisation d'équerres entraîne un surcoût de matière. De plus, dans certains cas, à cause des contraintes imposées sur la position des tubes et des bielles, il n'existe pas assez d'espace pour loger ces équerres entre le tube et l'extrémité proximale de la bielle.

L'invention vise à remédier à cet inconvénient en proposant une bielle améliorée.

Elle a donc pour objet un ensemble tel que définit par la revendication 1.

La bielle ci-dessus peut être directement montée sur le tube grâce à l'utilisation du capuchon amovible. Ainsi, il n'est pas nécessaire de recourir systématiquement à des pièces intermédiaires telles que des équerres pour fixer l'extrémité proximale sur le tube. Cela se traduit par une économie de matière et un gain de place.

Les modes de réalisation de cette bielle peuvent comporter une ou plusieurs des caractéristiques additionnelles.

Ainsi, dans une variante, la bielle comprend une couche en matériau élastomère recouvrant la périphérie intérieure de l'alésage pour amortir les vibrations du moteur. L'utilisation d'une couche en matériau élastomère permet d'amortir les vibrations du moteur.

Avantageusement l'extrémite distale de la bielle est dépourvue de matériau élastomère pour amortir les vibrations du moteur ce qui simplifie la réalisation de cette bielle,.

Dans une variante, la bielle comprend des organes de fixation du capuchon déplaçables, en alternance, entre une position de maintien du capuchon dans sa position montée et une position libérée dans laquelle le capuchon peut passer de sa position montée à sa position démontée. La présence d'organe de fixation sur la bielle permet de monter et de démonter librement cette bielle.

Dans une variante, l'ensemble est réalisé avec des bielles comportant des points de fixation disposés de façon symétrique par rapport à un axe de roulis du moteur.

L'invention a également pour objet un véhicule comportant l'ensemble ci-dessus en particulier un ensemble dans lequel les tubes sont associés au châssis arrière du véhicule et le moteur est un moteur électrique.

L'invention sera mieux comprise à la lecture de la description qui va suivre, donnée uniquement à titre d'exemple non limitatif et faite en se référant aux dessins sur lesquels :
- la figure 1 est une illustration schématique d'un véhicule équipé de bielles de fixation d'un moteur, et
- les figures 2 et 3 sont des illustrations schématiques et en perspective d'une bielle de fixation du véhicule de la figure 1.

Dans la suite de cette description, les caractéristiques et fonctions bien connues de l'homme du métier ne sont pas décrites en détail.

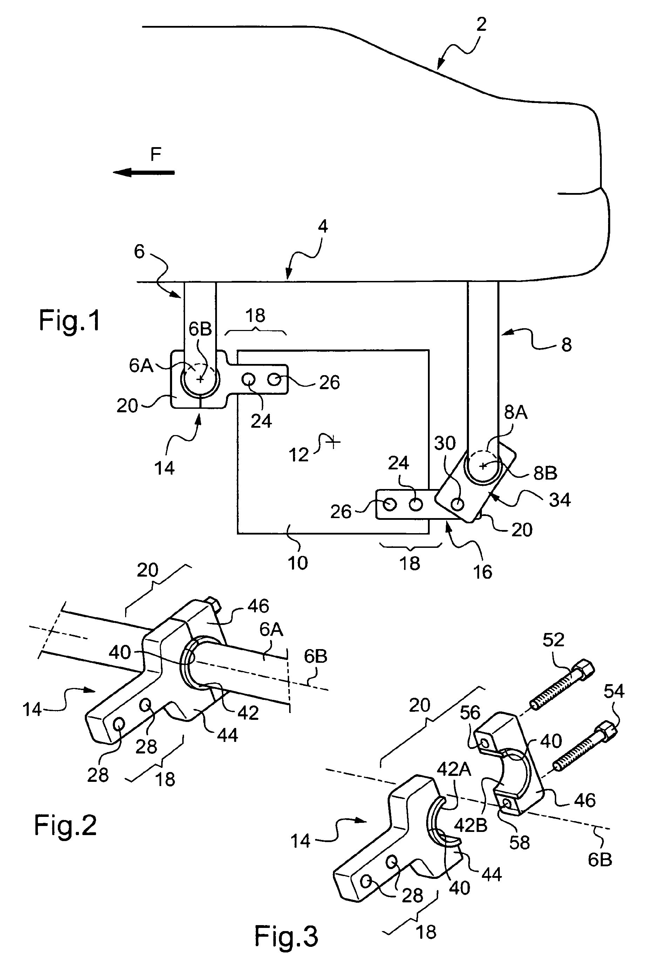

La figure 1 représente un véhicule 2 tel qu'un véhicule automobile. Ce véhicule 2 est équipé d'un châssis 4 rigide sur lequel sont montés l'ensemble des équipements du véhicule 2. Pour simplifier la figure 1, seul le train arrière du véhicule 2 est représenté.

La partie arrière du châssis 4 est pourvue de tubes 6, 8 de fixation d'un moteur électrique 10. Ces tubes 6 et 8 sont fixés sans aucun degré de liberté et de façon irréversible au châssis 4.

Chacun de ces tubes 6, 8 comprend une section tubulaire horizontale, respectivement, 6A, 8A. Ces sections tubulaires 6A, 8A s'étendent le long, respectivement, d'axes de révolution 6B et 8B. Les axes 6B, 8B sont perpendiculaires à la direction F de déplacement du véhicule. Ces axes 6B, 8B sont également sensiblement parallèles à la surface de roulement sur laquelle se déplace le véhicule 2.

L'espacement et la position des sections tubulaires 6A et 8A sont déterminés pour assurer un bon équilibrage du moteur 10 et donc limiter les vibrations, générées par ce moteur 10, qui sont transmises au châssis 4.

Le moteur 10 est équipé d'un arbre, non représenté, d'entraînement des roues motrices du véhicule 2. Ce moteur 10 présente un axe de roulis 12 passant par son centre de gravité.

Le moteur 10 est fixé aux sections tubulaires 6A et 8A par l'intermédiaire de bielles de fixation. Sur la Figure 1, seules deux bielles 14 et 16 de fixation sont représentées. La bielle 14 permet de raccorder mécaniquement le moteur 4 à la section tubulaire 6A. La bielle 16 permet quant à elle de raccorder mécaniquement le moteur 10 à la section tubulaire 8A.

Chacune de ces bielles est oblongue. Chaque bielle 14, 16 s'étend entre une extrémité distale 18 directement fixée sur le moteur 10 et une extrémité proximale 20 mécaniquement raccordée au châssis 4.

Chaque extrémité distale 18 est pourvue de points de fixation sur le moteur 10. Ici, chaque extrémité distale 18 est pourvue de deux points de fixation 24, 26.

Par exemple, chaque point de fixation 24, 26 est formé d'un alésage traversant 28 (Figures 2 et 3) creusé le long d'un axe parallèle aux axes 6B et 8B.

Le moteur 10 est quant à lui équipé de pions reçus dans chacun des alésages 24, 26 de manière à fixer, sans aucun degré de liberté, ce moteur 10 aux extrémités distales 18 des bielles 14 et 16.

Les points de fixation 24, 26 sont éloignés l'un de l'autre de manière à empêcher toute rotation du moteur 10 autour d'une extrémité distale 18. De plus, la position de ces points de fixation 24, 26 est déterminée en fonction de la position de l'axe 12 de manière à empêcher tout mouvement de roulis du moteur 10 autour de l'axe 12. Par exemple, les points de fixation 24, 26 des bielles 14 et 16 sont disposés de façon symétrique par rapport à l'axe 12.

Les extrémités distales 18 et en particulier les points de fixation 24 et 26 sont dépourvus de matériau élastomère propre à amortir les vibrations du moteur 10.

L'extrémité proximale 20 de la bielle 14 est directement montée autour de la section tubulaire 6A comme cela sera décrit plus en détail en regard de la figure 2.

L'extrémité proximale 20 de la bielle 16 est quant à elle montée autour d'une barre 30 dont les extrémités sont reçues de part et d'autre dans des trous ménagés dans des équerres. Sur la figure 1, seule une équerre 34 et visible. Par exemple, la barre 30 s'étend parallèlement à l'axe 8B.

L'équerre 34 est fixée sans aucun degré de liberté à la section tubulaire 8A. Par exemple, l'équerre 34 est soudée sur la section tubulaire 8A.

La figure 2 représente plus en détail la bielle 14 dans une position montée autour de la section tubulaire 6A. La Figure 3 représente quant à elle la bielle 14 dans une position démontée.

L'extrémité proximale 20 comprend un alésage traversant 40 creusé le long d'un axe de révolution confondu avec l'axe 6B dans la position montée. Ici, le diamètre de l'alésage 40 est strictement supérieur au diamètre de la section tubulaire 6A.

Une bande 42 en matériau élastomère est fixée sur la périphérie intérieure de l'alésage 40. Par exemple, le matériau élastomère est du caoutchouc. Cette bande 42 est coincée entre la périphérie extérieure de la section tubulaire 6A et la périphérie intérieure de l'alésage 40 dans la position montée. Cette bande 42 est conçue pour limiter la transmission des vibrations du moteur 10 au châssis 4 par l'intermédiaire de la bielle 14. La périphérie intérieure de la bande 42 est directement en appui sur la périphérie extérieure de la section tubulaire 6A dans la position montée.

Pour permettre le montage de l'extrémité proximale 20 autour de la section tubulaire 6A, celle-ci est réalisée en deux parties, respectivement, un corps 44 et un capuchon amovible 46.

Le corps 44 est fixé sans aucun degré de liberté à l'extrémité distale 18. Par exemple, le corps 44 et l'extrémité 18 ne forment qu'un seul bloc de matière.

Dans la position démontée (Figure 3), le capuchon 46 libère un passage latéral permettant d'introduire la section tubulaire 6A à l'intérieur de l'alésage 40 par un mouvement de translation dans une direction perpendiculaire à l'axe 6B. Dans la position montée, le capuchon 46 obture ce passage latéral de manière à verrouiller la section tubulaire 6A à l'intérieur de l'alésage 40. Par exemple, à cet effet, l'alésage 40 est réalisé pour moitié à l'intérieur du corps 44 et pour l'autre moitié à l'intérieur du capuchon 46. Ainsi, lorsque le capuchon 46 est séparé du corps 44, la section tubulaire 6A peut être introduite à l'intérieur de l'alésage 40. Dans ce mode de réalisation, la bande 42 est divisée en deux parties 42A et 42B (Figure 3) respectivement solidaires du corps 44 et du capuchon 46.

Enfin, l'extrémité proximale 20 comporte des organes de fixation 50 du capuchon 46 sur le corps 44. Ces organes de fixation son déplaçables entre une position de maintien du capuchon 46 dans la position montée et, en alternance, dans une position libérée dans laquelle le capuchon 46 peut être détaché du corps 44 afin de permettre le démontage de la bielle 14 de la section tubulaire 6A. Par exemple, ces organes de fixation comportent ici des boulons 52, 54 aptes à traverser des trous traversants 56, 58 (Figure 3) ménagés dans le capuchon 46 pour être vissés dans le corps 44.

Ainsi, initialement, le capuchon 46 est dans sa position démontée. Dans cette position, la section tubulaire 6A est introduite à l'intérieur de l'alésage 40. Ensuite, le capuchon est déplacé vers sa position montée puis maintenu dans cette position montée après vissage des boulons 52 et 54.

Ainsi, le capuchon 46 permet de monter la bielle 14 directement sur la section tubulaire 6A évitant le recours à des équerres ou d'autres éléments de fixation intermédiaires.

De nombreux autres modes de réalisation sont possibles. Par exemple, si nécessaire, l'extrémité distale peut être équipée de matériau élastomère de façon à amortir les vibrations du moteur 10. Par exemple, ce matériau élastomère se présente sous la forme d'une bande coincée entre les pions solidaires du moteur et les alésages 28.

De nombreux autres modes de réalisation des points de fixation 24 et 26 sont également possibles. Par exemple, les points de fixations 24 et 26 peuvent être réalisés par soudure.

Les tubes 6 et 8 et en particulier les sections tubulaires 6A et 8A ne sont pas nécessairement creuses et peuvent être pleines.

La bielle 14 décrite ici peut également être utilisée pour fixer un moteur à combustion thermique. Elle peut également être utilisée pour fixer un moteur sur le train avant du véhicule et en particulier sur la partie avant du châssis 4.

## Revendications

1. Ensemble comportant un moteur, des tubes (6 ; 8) associés à un châssis, **caractérisé en ce que** le moteur est fixé aux tubes par des bielles (14, 16) comprenant un capuchon amovible (46) déplaçable d'une position démontée
dans laquelle le capuchon libère un passage latéral permettant d'introduire le tube à l'intérieur d'un alésage (40) réalisé dans une extrémité proximale (20) de la bielle, vers une position montée dans laquelle le capuchon obture le passage latéral pour verrouiller le tube à l'intérieur de l'alésage, chaque bielle s'étendant entre une extrémité distale (18) apte à être fixée directement sur le moteur et l'extrémité proximale (20) comportant l'alésage (40) apte à recevoir le tube dans la position montée, l'extrémité distale étant pourvue de deux points de fixation (24, 26) du moteur.

2. Ensemble selon la revendication 1, dans lequel chaque bielle comprend une bande (42) en matériau élastomère recouvrant la périphérie intérieure de l'alésage (40) pour amortir les vibrations du moteur.

3. Ensemble selon l'une quelconque des revendications précédentes, dans lequel l'extrémité distale est dépourvue de matériau élastomère pour amortir les vibrations du moteur.

4. Ensemble selon l'une quelconque des revendications précédentes, dans lequel chaque bielle comprend des organes (52, 54) de fixation du capuchon (46) déplaçables, en alternance, entre une position de maintien du capuchon dans sa position montée et une position libérée dans laquelle le capuchon peut passer de sa position montée à sa position démontée.

5. Ensemble selon l'une quelconque des revendications précédentes dans lequel le moteur présente un axe de roulis (12), **caractérisé, en ce que** les points de fixation (24, 26) des bielles (14 ; 16) sont disposés de façon symétrique par rapport à l'axe de roulis (12).

6. Véhicule, **caractérisé en ce qu'**il comporte au moins un ensemble selon l'une quelconque des revendications précédentes

7. Véhicule selon la revendication 6, dans lequel le châssis est le châssis arrière (4) du véhicule et le moteur un moteur électrique (10).

## Claims

1. An assembly comprising an engine, tubes (6; 8) associated with a chassis, **characterized in that** the engine is fixed to the tubes by connecting rods (14, 16) comprising a removable cap (46), displaceable from a disassembled position in which the cap frees a lateral passage permitting the tube to be introduced in the interior of a bore (40) formed in a proximal end (20) of the connecting rod, towards a mounted position in which the cap closes off the lateral passage to lock the tube in the interior of the bore, each connecting rod extending between a distal end (18), suited to be fixed directly on the engine, and the proximal end (20) comprising the bore (40), suited to receive the tube in the mounted position, the distal end being provided with two fixing points (24, 26) of the engine.

2. The assembly according to Claim 1, in which each connecting rod comprises a strip (42) of elastomer material covering the interior periphery of the bore (40) to damp the vibrations of the engine.

3. The assembly according to any one of the preceding claims, in which the distal end is without elastomer material to damp the vibrations of the engine.

4. The assembly according to any one of the preceding claims, in which each connecting rod comprises fixing members (52, 54) of the cap (46) which are displaceable, in alternation, between a holding position of the cap in its mounted position and a freed position in which the cap can pass from its mounted position to its disassembled position.

5. The assembly according to any one of the preceding claims, in which the engine has a roll axis (12), **characterized in that** the fixing points (24, 26) of the connecting rods (14; 16) are disposed symmetrically with respect to the roll axis (12).

6. A vehicle, **characterized in that** it comprises at least one assembly according to any one of the preceding claims.

7. The vehicle according to Claim 6, in which the chassis is the rear chassis (4) of the vehicle and the engine is an electric engine (10).

## Patentansprüche

1. Anordnung, die einen Motor, Rohre (6; 8), die mit einem Fahrgestell verbunden sind, aufweist, **dadurch gekennzeichnet, dass** der Motor an den Rohren durch Pleuel (14, 16) befestigt ist, die eine abnehmbare Kappe (46) aufweisen, die von einer demontierten Position, in der die Kappe eine seitliche Passage freigibt, die es erlaubt, das Rohr in das Innere einer Bohrung (40), die in einem proximalen Ende (20) des Pleuels hergestellt ist, einzuführen, zu einer montierten Position bewegbar ist, in der die Kappe die seitliche Passage verschließt, um das Rohr in dem Inneren der Bohrung zu verriegeln, wobei sich jedes Pleuel zwischen einem distalen Ende (18), das geeignet ist, um direkt auf dem Motor befestigt zu werden, und dem proximalen Ende (20), das die Bohrung (40) enthält, die geeignet ist, um das Rohr in der montierten Position aufzunehmen, erstreckt, wobei das distale Ende mit zwei Befestigungsstellen (24, 26) des Motors versehen ist.

2. Anordnung nach Anspruch 1, bei der jedes Pleuel ein Band (42) aus Elastomermaterial aufweist, das den inneren Umfang der Bohrung (40) abdeckt, um die Schwingungen des Motors zu dämpfen.

3. Anordnung nach einem der vorhergehenden Ansprüche, bei der das distale Ende kein Elastomermaterial aufweist, um die Schwingungen des Motors zu dämpfen.

4. Anordnung nach einem der vorhergehenden Ansprüche, bei der jedes Pleuel Organe (52, 54) zum Befestigen der Kappe (46) aufweist, die abwechselnd zwischen einer Halteposition der Kappe in ihrer montierten Position und einer freigegebenen Position, in der die Kappe von ihrer montierten Position zu ihrer demontierten Position übergehen kann, bewegbar sind.

5. Anordnung nach einem der vorhergehenden Ansprüche, bei der der Motor eine Schlingerachse (12) aufweist, **dadurch gekennzeichnet, dass** die Befestigungsstellen (24, 26) der Pleuel (14; 16) symmetrisch in Bezug zu der Schlingerachse (12) angeordnet sind.

6. Fahrzeug, **dadurch gekennzeichnet, dass** es wenigstens eine Anordnung nach einem der vorhergehenden Ansprüche aufweist.

7. Fahrzeug nach Anspruch 6, bei dem das Chassis das Heckchassis (4) des Fahrzeugs ist und der Motor ein Elektromotor (10) ist.
